# EUROPEAN PATENT SPECIFICATION

(11) **EP 1 233 678 B1**
(45) Date of publication and mention of the grant of the patent: **17.03.2004**
(21) Application number: 00976065.3
(22) Date of filing: 22.11.2000
(51) Int. Cl.: A23K 1/16, A23K 1/18, A23L 1/32

(54) **ZOOTECHNICAL FORMULATIONS COMPRISING BILE ACIDS**
GALLENSÄUREN ENTHALTENDE ZOOTECHNISCHE FORMULIERUNGEN
FORMULATIONS ZOOTECHNIQUES RENFERMANT DES ACIDES BILIAIRES

(30) Priority: 30.11.1999 IT MI992503
(43) Date of publication of application: 28.08.2002
(73) Proprietor: Acme Drugs S.r.l., 42025 Cavriago (Emilia) (IT); Ice s.r.l., 42100 Reggio Emilia (IT)
(72) Inventor: PREDIERI, Vilder, I-42025 Cavriago (IT); BARTOLI, Enzo, I-42100 Reggio Emilia (IT)
(74) Representative: Minoja, Fabrizio, Dr.
(86) International application number: PCT/EP2000/011611
(87) International publication number: WO 2001/039609

(56) References cited:
- EP-A- 0 435 671
- EP-A- 0 503 959
- EP-A- 0 580 078
- EP-A- 0 978 236
- US-A- 5 464 637
- S.M. HAMMAD ET AL. : "Dietary cholesterol metabolism in Japanese quail lines selected for plasma cholesterol levels" PROCEEDINGS OF THE SOCIETY FOR EXPERIMENTAL BIOLOGY & MEDICINE., vol. 214, no. 1, 1997, pages 62-68, XP002165214 ACADEMIC PRESS INC. NEW YORK., US ISSN: 0037-9727
- R.A. SINGH: "A note on feeding of bile-acid sequestrants on cholesterol metabolism of laying hens : Ion exchange resin (cholestyramine) and saponin" INDIAN JOURNAL OF ANIMAL SCIENCES., vol. 45, no. 3, 1975, pages 163-165, XP000992770 INDIAN COUNCIL OF AGRICULTURAL RESEARCH, NEW DELHI., IN ISSN: 0367-8318

## Description

The present invention relates to formulations comprising pure bile acids for the zootechnical-veterinary use.

The invention further relates to the use of the formulations of the invention for reducing the cholesterol content in hens eggs and to promote the growth of mammals such as cattle, swine and sheep.

### TECHNOLOGICAL BACKGROUND

The use of antibiotics such as spiramycin, tylosin, virginiamycin, bacitracin and the like as growth promoters (auxinic agents) for livestock has been known for some time, but it is at present subject to increasingly stringent restrictions or even to law prohibitions.

In particular, the authorisation of use of said substances has been withdrawn by the European Union on July 1, 1999, whereas that of two other known growth promoters, carbadox and olaquindox, has been withdrawn on September 1, 1999.

The zoothecnical industry, therefore, calls for said growth promoters to be replaced by safe compounds, which do not remain as undesirable residues in the zootechnical products and guarantee the improvement of both production and feed conversion efficiency with low costs.

The zootechnical use of bile acids or of fractions containing them has already been proposed, but only in so far to particular uses.

For example, JP 62143647 discloses the use of bile acids to improve the quality of beef, in particular to decrease the fat content. No growth promoting effect is however disclosed.

On the other hand, a growth promoting effect is disclosed in JP-A-55120756 (Miyata T) but only as far as poultry is concerned.

It is well known that growth promoters suitable for an animal species can be quite unsuitable for a different species. In particular, the problems involved in chicken-farming are known to be different from those connected with mammal-breeding in general.

The use of bile acids in combination with vitamins to increase the content in Vitamin D3 in hen eggs was disclosed in US 5,464,637.

Other zootechnical uses of bile acids have been described concerning fish culture (JP 54130393; JP 61172826).

EP-A-0 435 671 discloses a feed additive comprising bile powder and its use as growth promoting feed supplement for cattle and swine. EP-A-0 503 959 discloses a feed additive comprising bile powder and its use as growth promoting feed supplement for livestock, poultry and fish.

### DISCLOSURE OF THE INVENTION

It has now been found that the administration of pure bile acids both exerts a marked growth promoting effect in mammals and allows to reduce the cholesterol content of laying hens eggs.

The invention therefore provides in a first aspect, zootechnical and veterinary formulations consisting of pure bile acids or mixtures thereof in combination with one or more components selected from the group consisting of: animal or vegetable meals, amino acids, vitamins, mineral salts, fodder, animal or vegetable fats.

In a second aspect, the invention provides the zootechnical and veterinary formulations of claim 1 for the preparation of growth promoting feed supplements according to claim 2 for breeding mammals, particularly cattle, sheep and swine.

The invention further relates to the respective uses of the above mentioned formulations for the preparation of feed supplements for reducing the presence of somatic cells in bovine milk and for the preparation of feed supplements for laying hens for reducing cholesterol content in eggs.

### DETAILED DISCLOSURE OF THE INVENTION

Pure bile acids which are the major component of the formulations of the invention preferably comprise cholic, dehydrocholic, deoxycholic, chenocholic, chenodeoxycholic, ursocholic, ursodeoxycholic, iocholic, iodeoxycholic acids and the non toxic or glycine- or taurine- conjugated salts thereof.

In addition to the pure acids or mixtures thereof the zootechnical and veterinary formulations further consist of one or more components selected from the group consisting of : animal or vegetable meals, amino acids, vitamins, mineral salts, fodder, animal or vegetable fats.

Bile acids are formulated into formulations suitable for animal feeding, such as feed, premix, additives, by using conventional techniques.

The pure bile acids content may range from 70 to 98% in the case of additives, whereas it may range around 10 to 30% in the case of a premix.

The feed will usually contain additives in amounts from about 2 to about 50 g per 100 kg of feed and premix in amounts ranging from 70 to 150 g per 100 kg of feed.

To promote growth of cattle, swine or sheep, daily amounts of bile acids ranging from 1 to 10 g per animal will usually be sufficient, more particularly about 4 g for a 100 kg weight swine and about 7-8 g for adult cattle daily.

In the case of cows, it has furthermore been observed that the administration of bile acids involves a reduction of somatic cells in milk.

The administration of a feed containing about 0.01 to 0.2% of pure bile acids to laying hens, for times of one to nine - ten weeks, induces a reduction of the cholesterol content in egg yolk above 10%.

The present invention therefore allows to promote growth, increasing production, improving feed conversion efficiency and therefore production costs, and to qualitatively improve the productions of quality typical products as an alternative to standardization of the productions themselves, decreasing the need for therapeutical interventions with allopathic medicaments.

The invention will be described in greater detail in the following Examples.

### EXAMPLE 1

27.5 g of deoxycholic acid and 2.5 g of cholic acid are added to 100 kg of feed for laying hens having the following percent composition:

| Formulation A | Percentage |
|---|---|
| Maize flour | 52.80% |
| Soy extract flour | 27.45% |
| Common wheat | 3.25% |
| Alfalfa flour | 1.00% |
| Cattle and swine fat | 3.20% |
| Calcium carbonate | 8.50% |
| Hydrogen phosphate | 1.60% |
| Molasses | 0.50% |
| Laying hens supplement | 0.50% |
| Yellow filomix | 0.40% |
| Methionine MHA | 0.20% |
| Sodium hydrogen carbonate | 0.20% |
| L-lysine | 0.10% |
| Sodium chloride | 0.10% |
| Magnesium oxide | 0.10% |
| Biotin | 0.10% |
| | 100% |

### B. Pure bile acids

| | |
|---|---|
| Deoxycholic acid | 27.5 g per 100 kg of formulation A |
| Cholic acid | 2.5 g per 100 kg of formulation A |

### EXAMPLE 2

### Pure bile acids decreasing action on cholesterol concentration in hen eggs.

220 Brown Plus hens were divided in 5 groups; 3 groups were treated with feed having the basic formulation reported in Example 1, but different percentages of bile acids, as reported in the following Table: a first control group was treated with the same formulation lacking bile acids whereas a second group was treated with lecithin.

Yolks were collected after 0, 14, 28 and 42 days of treatment. For each of said times, 7 pool consisting of 6 eggs, for each of the five treatments described above, were collected. The cholesterol content in yolks was evaluated by HPLC.

The mean percent values of the cholesterol concentration compared with the blank are reported in the following Table:

**TABLE**

| Formulation | Treatment | Time (days) | Mean (% compared with blank) |
|---|---|---|---|
| (*) N.N | 3 | | 100 |
| Lecithin | 1 | | 99.7 |
| a.p.0.05% | 2 | 14 | 99 |
| a.p. 0.10% | 4 | | 96.9 |
| a.p. 0.15% | 5 | | 94.2 |
| (*) N.N | 3 | | 100 |
| Lecithin | 1 | | 96.4 |
| a.p. 0.05% | 2 | 28 | 94.5 |
| a.p. 0.10% | 4 | | 91.8 |
| a.p. 0.15% | 5 | | 90.1 |
| (*) N.N. | 3 | | 100 |
| Lecithin | 1 | | 94.9 |
| a.p. 0.05% | 2 | 42 | 89.8 |
| a.p. 0.10% | 4 | | 87.7 |
| a.p. 0.15% | 5 | | 85.7 |

| | | | |
|---|---|---|---|
| (*) N.N. No treatment. | | | |

### EXAMPLE 3

### Swine feed pre-mix

### Composition

| | |
|---|---|
| Cholic acid | 7 g |
| Deoxycholic acid | 4 g |
| Chenodeoxycholic acid | 2.5 g |
| Vegetable carrier q.s. to gr 100 | |

Mix 150 g per 100 kg of feed; equivalent to 4 g per one 100 kg body weight swine / day.

### EXAMPLE 4

### Cattle feed pre-mix

| | |
|---|---|
| Deoxycholic acid | 25 g |
| Cholic acid | 10 g |
| Vegetable carrier q.s. to 100 g | |

Mix 75 g for 100 g of feed; equivalent to 7.5-8 g per adult cattle head daily.

## Claims

1. Zootechnical and veterinary formulations consisting of pure bile acids or mixtures thereof **in combination with one or more components selected from the group consisting of: animal or vegetable meals, amino acids, vitamins, mineral salts, fodder, animal or vegetable fats.**

2. Formulations as claimed in claim 1 in the form of feed, additive or pre-mix.

3. The use of pure bile acids for the preparation of feed supplements for reducing the presence of somatic cells in bovine milk.

4. The use of pure bile acids for the preparation of feed supplements for laying hens for reducing cholesterol content in eggs.

5. The use of pure bile acids for the preparation of growth promoting feed supplements according to claim 2 for breeding mammals.

## Patentansprüche

1. Zootechnische und veterinäre Formulierungen, die aus reinen Gallensäuren oder Gemischen davon bestehen in Kombination mit einer oder mehreren Komponenten, ausgewählt aus der Gruppe, bestehend aus: tierische oder pflanzliche Mehle, Aminosäuren, Vitamine, Mineralsalze, Futtermittel, tierische oder pflanzliche Fette.

2. Formulierungen nach Anspruch 1 in der Form einer Füllmasse, eines Zusatzes oder einer Vormischung.

3. Verwendung von reinen Gallensäuren für die Herstellung von Füllmasse-Zusätzen zur Reduzierung der Anwesenheit von somatischen Zellen in Rindermilch.

4. Verwendung von reinen Gallensäuren für die Herstellung von Füllmasse-Zusätzen für Legehühner zur Reduzierung des Cholesterin-Gehalts in Eiern.

5. Verwendung von reinen Gallensäuren für die Herstellung von wachstumfördemden Füllmasse-Zusätzen gemäss Anspruch 2 für Zuchtsäugetiere.

## Revendications

1. Formulations zootechniques et vétérinaires consistant en des acides biliaires purs ou des mélanges de ceux-ci en combinaison avec un ou plusieurs composants choisis dans l'ensemble constitué des farines animales ou végétales, des acides aminés, des vitamines, des sels minéraux, du fourrage et des graisses animales ou végétales.

2. Formulations selon la revendication 1, sous forme d'aliments, d'additifs ou de prémélanges.

3. Utilisation d'acides biliaires purs pour la préparation de suppléments alimentaires destinés à réduire la présence de cellules somatiques dans le lait bovin.

4. Utilisation d'acides biliaires purs pour la préparation de suppléments alimentaires destinés à des poules pondeuses, pour réduire la teneur en cholestérol des oeufs.

5. Utilisation d'acides biliaires purs pour préparer des suppléments alimentaires promoteurs de croissance selon la revendication 2 pour des mammifères reproducteurs.
